Europäisches Patentamt

European Patent Office

Office européen des brevets

(11) Publication number: **0 346 039**
**A2**

# EUROPEAN PATENT APPLICATION

(21) Application number: 89305636.6

(51) Int. Cl.⁴: **G06F 9/46**

(22) Date of filing: 05.06.89

(30) Priority: 06.06.88 US 203227

(43) Date of publication of application:
**13.12.89 Bulletin 89/50**

(84) Designated Contracting States:
**AT BE CH DE ES FR GB GR IT LI LU NL SE**

(71) Applicant: **DEMAX SOFTWARE, INC**
**999 Baker Way, Suite 500**
**San Mateo California 94404(US)**

(72) Inventor: **Esbensen, Daniel Mark**
**4075-10 Carmel View**
**San Diego California 92130(US)**

(74) Representative: **Cookson, Barbara Elizabeth et al**
**WITHERS & ROGERS 4 Dyer's Buildings**
**Holborn**
**London EC1N 2JT(GB)**

(54) **Dynamic load balancing for multi-user computers.**

(57) In a multi-user computer system using a central processing unit (CPU), page addressed virtual memory operating system, and a system storage location for storing a fixed set of system operating parameters with pre-assigned control values for allocating access to system resources, the resources comprising CPU processing cycles and resident memory, and employing one or more measurement devices and monitor routines for generating values for a set of measured performance parameters for each process relative to its allocation of system resources, a method and apparatus for dynamically re-allocating system resources, comprising providing a pre-defined set of desired performance values in a memory storage location, recording current measured system performance values for each process in a second memory location, generating adjustment factors according to a predetermined relatioship for each corresponding measured and desired performance value; and adjusting said system operating parameters in response to said adjustment factors.

EP 0 346 039 A2

FIG. 1

## DYNAMIC LOAD BALANCING FOR MULTI-USER COMPUTERS

## BACKGROUND OF THE INVENTION

Field of the Invention

The present invention relates to multi-user computer systems and more particularly to a method of improving system response and increasing available memory by dynamically adjusting resource allocation in response to system loading. The present invention further relates to a method and apparatus for managing computer system resources and improving operational efficiency through a performance feedback loop and adjustment of process specific operating parameters.

Description of Related Art

Every multi-user computer system no matter how big has a limited or finite amount of memory, both resident or remote storage, and a maximum amount of central processing unit (CPU) processing time, or cycles per second, available for executing individual processes or handling user interactions. In a typical multi-user environment, a large number of users with widely diverse processing requirements are often simultaneously competing for these limited resources under changing load conditions. Therefore, a system of resource management must be imposed on such systems to minimize scheduling conflicts that naturally arise and to prevent system deadlock or severe degradation of performance due to conflicting demands on resources.

The typical management technique is the establishment of user or process priorities to assure that designated processes receive prompt access to system resources. Under this approach, processes are assigned priorities based on relative importance of their output, or associated users, and are generally assigned successively higher priorities while waiting for execution until they gain access to resources. However, priority schemes are no more than delay scheduling schemes which merely shift or distribute a system load in time but do not improve its efficiency or use of resources. This approach effectively makes the computer system less responsive to the delayed processes and does little to improve system response for a large number of users having the same priority level. Delay scheduling has limited effect in the presence of a large number of CPU and/or memory intensive operations executed by a few high priority operations or interactive programs.

Another basic technique for managing system resources is the designation of operating system control parameters for various operational tasks or functions. Each control parameter acts as a flag or label associated with specific functions or operations of the computer system, such as assignment of minimum and maximum memory allocation per user, minimum or maximum CPU access time, or I/O access, and is assigned a control value that sets operating limits for that function or operation. An example of such a parameter is a parameter labeled QUANTUM which typically determines the minimum access time allotted to a process for either the CPU or resident memory, depending upon the computer system. This can be implemented in combination with priorities to provide multiple quantum access periods for some processes. At the same time, maximum limits on CPU access time are imposed to cause processes to periodically enter wait states and allow other processes access. Additional parameters set limits on the amount of memory used by each process and the amount by which it can be increased or decreased.

The values for the operating system parameters are chosen after consideration of general overall system requirements, resources available, and projected work load. The values assigned to the parameters are automatically installed on the system as part of a fixed system initialization of the computer when it powers up or is reset in some manner. The parameter values remain fixed and are only accessible for modification by system managers for periodic tuning of the system. Such modifications can take place to compensate for changing loads and user requirements based on system experience, or in response to user and resource expansion. To this end, a set of performance parameters are typically established and values accumulated for these parameters by resident monitoring routines that periodically measure certain variables to help ascertain processing bottlenecks and problems.

While the parameters, or their associated values, provide a complete template for managing the execution of processes, the parameters lack the ability to accommodate or focus on individual or specific process loading and response problems. The parameters also do not respond to rapid or short term dynamic load changes.

Memory allocation in multi-user computer systems, especially in virtual memory addressed systems, employs predefined units of memory generally referred to as pages. Each page represents a block or grouping of memory locations that is transferred or otherwise acted upon as a unit. The computer system operating parameter values establish the total number of pages each process can use as well as the number of resident pages allocated to a process at a given time. When a process requires data from one or more non-resident pages, a "page fault" occurs and that data is exchanged for data in one or more pages in the resident set.

If too many page faults occur across all of the active processes on a computer system, then the CPU spends additional time managing Input/Output (I/O) exchanges between resident and non-resident memory locations. Also, the act of swapping pages in and out of resident memory requires read/write operations to magnetic media which slows system response. The loss of CPU cylces for this type of communication or transfer management effects the amount of CPU resources left for other computations and interactive processes.

In some computer systems, the number of page faults experienced by processes accessing pages outside of the resident set can be used to affect changes in the resident set limits to allow memory intensive operations to retain more resident pages. The ability of an operating system to adjust memory allocation allows more efficient use of this resource during processing as opposed to a long term periodic maintenance rate. However, current resident set adjustment schemes suffer from several problems.

First, the adjustments to working or resident set sizes are controlled by the static parameters previously discussed. The minimum and maximum number of pages or the incremental or decremental values allowed during a change in resident set size are all fixed quantities. Therefore, such adjustments provide an average solution to highly variable and dynamic problems and cannot respond to variations in individual process load conditions. Second, due to the use of larger increment steps than decrement steps, the adjustment processes tend to enter oscillation modes between too much and too little memory and excessive CPU time is consumed in working set adjustments. Computer system manufacturers generally teach that such adjustment schemes should be disabled and not used, as they create more problems for resource allocation.

What is needed is a method and apparatus for monitoring the performance of a multi-user computer system under a variety of loading and processing conditions, and for making dynamic adjustments to both memory and CPU time allocations for each process. The technique employed needs to be substantially immune to oscillation and needs to be very memory efficient and simple to implement in conjunction with the current operating system. The method should also provide for orderly return to original operating characteristics when desired. The method must not overwrite any portion of the basic operating system which would jeopardize warranty or service contract agreements on large multi-user systems.

## SUMMARY

In view of the above problems in the art, one purpose of the present invention is to provide a method of dynamically adjusting system control parameters in a multi- user or multi-process computer to optimize utilization of computer resources for each user or process.

An advantage of the present invention is that the resources of the computer system are automatically adjusted at periodic intervals to accommodate even highly dynamic load conditions.

Another purpose of the present invention is to provide a method and apparatus for dynamically adjusting working set control parameters of process control software so that the parameters optimize the allocation of resources to individual processes.

An additional advantage of the present invention is that resource allocation is adjusted separately for each process in a manner that avoids oscillatory behavior.

These and other purposes, objects, and advantages are realized in a method of dynamically adjusting system operating parameters in a multi-user computer system in response to variations in load on the system by separate processes running on the system. This is implemented on a multi-user computer system using a central processing unit (CPU), page addressed virtual memory and a set of predefined system control parameters which are combined with a corresponding set of control values for allocating access to system resources by each process. The resources comprise CPU processing cycles, working set memory size and processing time, process priority, and I/O transfer timing, and there are one or more

3

monitor routines for measuring a series of internal performance values for each process relative to its allocation of system resources. The method of dynamically re-allocating system resources through adjustment of the pre-defined system control parameters, comprises the steps of storing a set of desired performance values in a memory location, accumulating monitored performance values measured in response to current system control parameters for each process in a second memory location, generating adjustment factors according to a predetermined relationship between the corresponding measured and desired performance values, and adjusting the system control parameters in response to the adjustment factors.

In a preferred embodiment, the method of the invention further comprises waiting a predetermined period of time and returning to said accumulating step, said waiting period being selected from a plurality of waiting periods of preset length in response to relative differences between said desired and measured performance values. There are three preferable waiting periods are on the order of about 6, 30, and 90 seconds in length. The method steps are repeated periodically until a termination command is received. A check is periodically conducted to determine if the computer system has requested termination of the method steps.

The preset operating system control parameter values are loaded into the computer system at initialization which occurs at power-up or reset. These values are read and stored in a third memory location, such as a set of system buffers, for later access. The system operating parameters establish controlling values for pre-selected minimum and maximum central processor access time, minimum number of pages of memory in a process resident set, size of resident set increments, size of resident set decrements, maximum and minimum page fault rates. The performance parameters comprise parameters for page fault rate, page fault waits, resident set size, suspension waits, computable processes, computable process outswap states, page collisions, and free pages for each process.

The step of adjusting further comprises adjusting working set size and QUANTUM and IOTA parameter values for processes experiencing page fault rates outside of the pre-assigned high or low limits in conjunction with assigned CPU times, and decreasing working set size and access time for processes within the page fault range limits in view of current CPU time demands. Excess memory listed on the working set lists is transferred to free page use.

To implement the method of the present invention an apparatus is used for controlling the allocation of resources in a multi-user computer system having a central processing unit (CPU), page addressed virtual memory connected to said CPU, and a fixed set of system operating parameters with pre-assigned control values for allocating access to system resources, the resources comprising CPU processing cycles and resident memory, and employing one or more performance monitors for generating values for a set of measured performance parameters for each process relative to its allocation of system resources. The apparatus uses a system storage means connected to the CPU for storing system operating parameters and corresponding system control values. Status storage means connected to the CPU stores values associated with the performance parameters for each process. A monitoring means operatively coupled to the CPU measures the performance values for each active process and stores them in the status storage means. A status accumulator is connected to the monitoring means and is capable of receiving measured performance values and accumulating them to form a set of system status values. An adjuster means is connected between the CPU and the processes and uses operating system parameters to adjust process control parameters under program control. A resource control means connected to the CPU and to the adjuster means provides a new set of desired values for the performance parameters to both for adjusting resource allocation for each process. The response means periodically accumulates the performance values and generates an adjustment factor for use by the adjuster means in changing the resource allocation of the process.

In further aspects of the invention, the apparatus also comprises a mode selector connected to the adjustment means and the monitoring means for determining the frequency of monitoring and adjusting in response to previous adjustment values and at least one buffer means for storing information.

## BRIEF DESCRIPTION OF THE DRAWINGS

The novel features of the present invention may be better understood from the accompanying description when taken in conjunction with the accompanying drawings in which like characters refer to like parts and in which:

Figure 1 illustrates a control diagram for a preferred implementation of the present invention in a multi-user computer system employing adjustable operating parameters;

Figure 2 illustrates a flow diagram of the method of the present invention; and

Figure 3 presents a graphical illustration of the average system response time in an exemplary computer system before and after using the method of the present invention.

## DETAILED DESCRIPTION OF A PREFERRED EMBODIMENT

The present invention provides a method for dynamically re-allocating computational resources in a multi-user computer system to improve the throughput of data and interactive response. The present invention accomplishes this by invoking working set adjustment routines for each active process individually in cooperation with a tightly coupled feedback loop that measures the deviation of current process performance from preset performance criteria. In this manner, the method of the present invention provides a mechanism for using historical system and process performance information as a basis for dynamically adjusting system operating parameter values and process specific implementation of those values to respond to system demands and improve overall system performance and response. The computer system is adjusted toward an operating state where periodically measured performance parameter values are closer or equal to a set of desired values or criteria. When measured performance approximates preset criteria, processes are no longer adjusted until system loading causes significant variations in performance, or a new set of desired performance values are provided.

The method of the present invention is described below in reference to a virtual memory type computer system. Exemplary computer systems on which this invention is used are those in the VAX family of computers provided by the Digital Equipment Corporation which employ the VMS operating system. For purposes of clarity, for disclosing details of implementation, and for illustrating an improvement in computer system operation, the present invention is described as being implemented within the VAX/VMS version 4.xx environment but those skilled in the art will readily appreciate that the method of the invention is readily applicable to other multi-user computer operating systems as well.

These computer systems have a number of users and/or processes that are being controlled or operated at any time. The term processes is used to denote the presence of more than an end user at a terminal since programs can be loaded and executed without interaction to a specific terminal. There are also a number of printers, modems, and magnetic media storage units connected to and operating through the central processor. Each of these items is run under a process or process control with which the CPU interacts.

As is known in the computer arts, a virtual storage or memory computer system is distinguished by its allocation of a processing memory address to every available memory storage location regardless of whether it is resident, active memory or secondary memory on a remote storage device such as a disk drive. The list of all such addresses forms a table of "virtual" memory addressable by processes on the computer system and one or more translation tables or lists are used to map virtual memory addresses into actual physical locations.

In this approach, processes running on the system treat all memory as contiguous and are allowed to address larger amounts of memory than actually resident at any time. The delay created by having to transfer information from non-resident to resident memory for processing is normally low and easily accommodated though a series of specialized wait states.

To facilitate operation and control, all memory in this type of operating environment is subdivided into "pages" which comprise a fixed number of bytes of data. The page data need not reside in a particular location but is simply a contiguous series of addressable locations for the predefined number of bytes. Computers currently employing VAX/VMS type operating systems typically use pages containing on the order of 512 bytes of data while other operating systems typically use pages on the order of 1024 to 2048 bytes each with other sizes being possible. Larger pages are well suited to holding and shifting large amounts of data in and out of resident memory for memory intensive processes, but potentially waste memory where smaller amounts of data are being used by a large number of processes.

In managing memory pages, each process is provided a set of pages in resident memory in which to store data and perform operations. Any executable process requires a determinable number of pages for data storage and performing computations which the computer system can allocate from resident memory. However, the amount of resident memory being limited, part of the total number of pages used by any process is in remote storage or non-resident memory at any given time so as to accommodate a larger number of processes at once in resident memory. The resident pages assigned to a given process are known as the "resident set" or "Working Set" (WS) of pages.

When a process is made active or loaded into memory, a series of resident pages on a Free Page List (FPL) are assigned to the process and a predetermined number of data pages are loaded into resident memory. A series of location or memory address pointers for the assigned pages are stored in a Working Set List (WSL) for the process. The process uses these pointers to transfer data into the assigned pages as needed. Not all of the assigned pages are necessarily used in the resident set depending upon the actual requirements of the process. Pages listed on the WSL are still part of the free memory until used by the process.

Whenever a process exceeds the resident page limit for data storage or retrieval, that is, all WSL pages are in use, or otherwise calls for non-resident data, a page fault occurs and data must be swapped between the working set and non-resident memory storage. This approach generally works well because processes do not require all of their pages at any one time and are often waiting for I/O transfers, other processes, or are subject to periodic wait states so that little delay results from page swapping.

However, when there are a large number of processes on a computer system with relatively small working sets, low number of pages, the CPU must spend an increasing amount of time managing I/O transfers of data between resident and non-resident memory. The loss of CPU cycles for this type of management reduces the amount of CPU resource, number of CPU cycles, available for other processes which impacts on overall system responsiveness. Also swapping pages in and out of resident memory requires read/write operations on magnetic media which also slows system response both to the particular process and in general for I/O management.

A monitor routine or device is provided for use by the operating system for accumulating page fault data in one or more storage registers or memory locations so that the number and rate of page faults can be monitored as a function of WS memory size and CPU access time. This provides an indication of process efficiency and proper WS sizing. This information may be used to adjust working set sizes in the computer system to alleviate consistently high page faulting and minimize processing delays.

Therefore, to control or manage memory page resources an operating system establishes system control parameters whose values determine the size of the working set. The operating system parameters also control the number of pages by which a working set is changed, increased or decreased, and the timing of such operations. At the same time, the operating system may control the minimum and maximum amount of time a process is computable or executable by being active in a working set.

These parameters are established at the time the computer operating system is installed and conform to average or typical computer system demands. Such parameters are linked through a table or list of pointers to specific memory locations or registers where corresponding control or operating values are stored. The values for the parameters are initialized through procedures well known in the art every time the computer system is initialized such as at "power-up" or at a reset. The table of parameter values is processed as part of the highest order mode in the hierarchy of the computer operating system, typically called the kernel or exec, and has a limited access encoding to prevent alteration by users and interference from non-authorized personnel. However, should a process have "authorization" or system access to the kernel mode level of the operating system, these parameters can be manipulated by that process.

As stated, the computer system begins operation by initializing the programming or operating environment and generating or loading an operating system. That is, it loads among other things a predetermined set of instructions, codes, and control values for associated operating parameters into reserved memory locations which are then used to control processes and resource allocation. Many fixed parameters control functions such as basic CPU cycle timing or access, overall memory size, or I/O designations and timing. Basic timing loops, allocations, or physical assignments are fixed by hardware and must remain fixed in software in order for the computer system to properly handle the variety of I/O routines or wait states that must be coordinated among the users. However, there are several adjustable parameters also stored upon initialization. These parameters are changeable by the system manager to help tune the computer system. In a VAX/VMS computer system some of these adjustable system parameters are designated as QUANTUM, IOTA, PFRATL, PFRATH, WSDEC, WSINC, AWSTIME, AWSMIN, BORROWLIM, GROWLIM, MPW-THRESH, and PIXSCAN.

The QUANTUM parameter typically defines the minimum amount of time a process is allowed access to the CPU for processing. In the current VAX/VMS implementation, this parameter sets the minimum amount of time a process is active, non-wait state, in resident memory in units of 10 milliseconds each. However, other time intervals can be used in other system designs. The IOTA parameter acts as a charge against the QUANTUM time period and sets an outer time limit for process execution or active status to assure periodic entry into a wait state so that every process regularly frees use of CPU time regardless of priority and activity. This parameter also selects periods of time in units of 10 milliseconds each. Once the period specified by the value assigned to the QUANTUM parameter has expired, the process sets a END-QUANTUM flag or indicator and relinquishes CPU control to another process.

Parameters listed above that incorporate the WS abbreviation, establish operating limits for active process working sets. The value for the AWSMIN parameter sets the minimum size for a working set, which is the minimum number of resident pages on the system assigned to the WSL from the free page list, FPL. The values of the WSDEC and WSINC parameters specify the number of pages by which WS, or the pointers for pages on the WSL, is decreased or increased, respectively, whenever the size of a working set is adjusted, and AWSTIME sets the minimum wait time between adjusting the size of a working set in 10 millisecond intervals.

The remaining parameters listed above determine various other limits related to WS size, adjustment, and page access. The PFRATL and PFRATH parameter values establish low and high, respectively, limits for the number of page faults per 10 second intervals below and above which adjustments to the working set are instituted.

The GROWLIM parameter value sets the minimum number of pagessident, SUSP, or be suspended and outswapped, SUSPO. A process can also have long delays in processing and request that the operating system place it in a "hibernating" and outswapped mode, HIBO, or encounter a local event that causes outswapping, LEFO. Of course the operating system maintains additional wait states such as MWAIT or MPW for implementing miscellaneous process wait states which are not discussed for this implementation of the present invention.

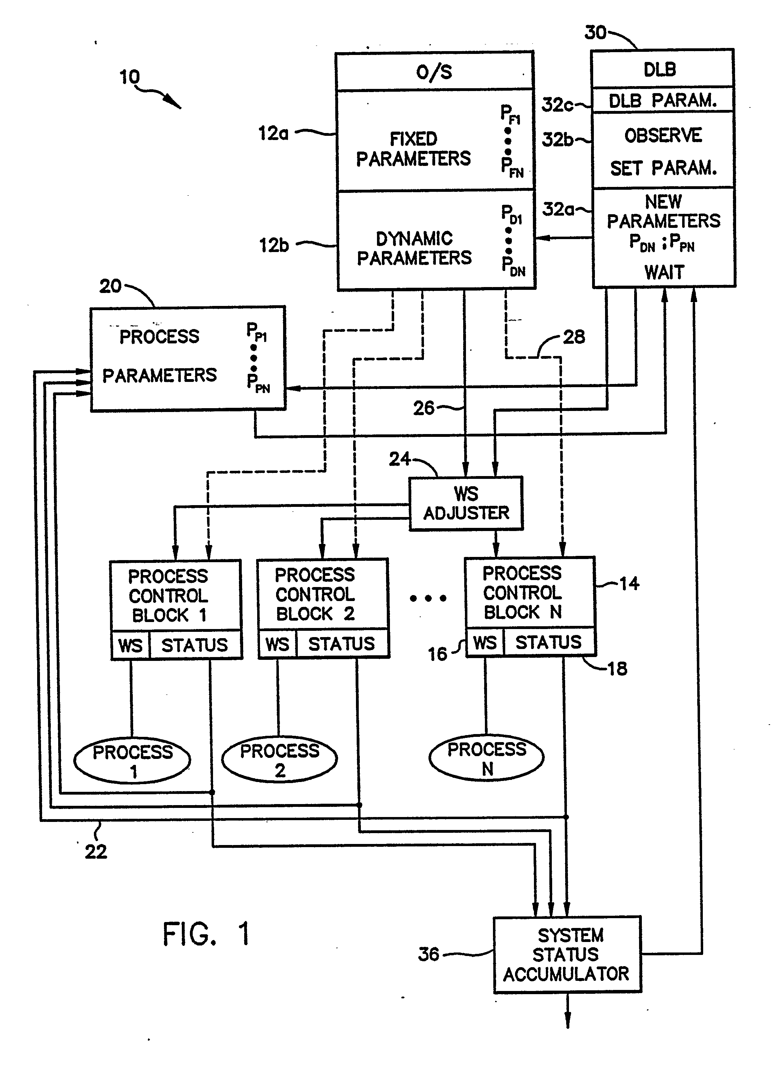

The operation of the present invention in conjunction with control parameters and wait states in a multi-user computer system for controlling resource allocation is better understood by referring to the block diagram of Figure 1. In Figure 1, a computer system process controller 10 is shown employing an operating system parameter control means or controller 12 connected in parallel to a series of Process Control Blocks (PCBs) 14. Each control block 14 stores current WS control values in a WS control unit 16 and accumulates information on process status in a series of storage registers 18 for a single process. The process control blocks 14 are also connected to a performance monitor 20 through line 22 which is connected to receive information from the storage registers 18.

Computer system process controllers and process control blocks generally comprise a combination of software routines, memory locations, and hardware devices used by the operating system to control system operations. The use and design of these control entities are well known to those skilled in the computer arts and is not discussed in further detail here.

The operating system parameter controller 12 comprises a set or array of memory locations used to store fixed operating system parameters, $P_{FN}$, 12a, and dynamic operating system operating parameters, $P_{DN}$, 12b. Upon initialization of the computer system, these operating system parameters are loaded into prescribed memory locations by the computer Operating System, OS, software or firmware. Although the parameters are generally loaded as part of initializing the operating system software, those skilled in the art will readily understand that they can be pre-stored in various hardware memory devices such as PROM's that are automatically polled or accessed.

The dynamic operating system parameters $P_{DN}$ comprise adjustable parameters whose values control a wide range of system operations or functions. The exact number of dynamic parameters varies according to the specific operating system employed and can be substantially large, on the order of one hundred or more. In the preferred embodiment only ten parameters from those previously discussed are adjusted in implementing the method of the present invention. However, as computer systems evolve and undergo changes in speed, memory capacity, efficiency of design, operating sytem architecture including new parameters or parameter labels, etc., other parameters can be selected for adjsutement by the method of the present invention.

The operating system parameters are used by each process control block 14 to establish the operating limits or characteristics for each process that is active on the computer system. This is accomplished by setting and storing working set control values in a set of memory locations or registers 16 assigned to each process when it is initialized. These control values comprise the minimum working set size and associated control limits such as CPU access time as determined by the operating system parameters. However, the WS control values are alterable in response to historical process performance to increase the working set page list to reduce page faulting or reduce the working set page list to reallocate memory where possible. For this reason the process control blocks 14 are connected to the operating control system means 12 through a Process Adjuster (PA) 24 which uses dynamic parameter values such as WSDEC and WSINC to adjust the working set size where appropriate. The operating system parameters are generally provided on the lines 26 to the process adjuster 24 but could be supplied directly on the lines 28 for intitialization or where direct control is desired.

Each control block 14 also accumulates information in a process status storage register 18. The accumulated data represents information regarding the number of page faults over fixed intervals of time, current wait states, etc. The status registers 18 have an output connected to the performance monitor 20 through the lines 22 and to an accumulator 36, discussed below.

The performance monitor 20 maintains a table of parameters such as Page Faults (PF), Cycles, Process Page Count (PPGCNT), Global Page Count (GPGCNT), WSL size, Free memory (FREE MEM), Free Page List (FPL) size, etc., which are used to determine the performance of each process N. If the process N page fault rate becomes too high, as set by initial values for the operating system, then WSDEC and WSINC can be used by the operating system parameter controller 12 or process adjuster 24 to re-write the control values in the WS registers 16 to adjust the working set size.

While the operating system management scheme described thus far allows for adjustment of process working set sizes to re-allocate memory across processes, it has been found inadequate to solve dynamic loading problems for a large number of processes. As discussed above, the fixed operating system adjustment parameters apply an "average solution" adjustment to all adjusted processes equally and fail to account for variations in process demand or dynamically changing loads. The value loaded for WSINC is relatively large and WSDEC very small so that large numbers page pointers for non-accessed pages are unnecessarily added to the WSL when only a few additional pages were needed for non-memory intensive processes.

Process adjustment is also not allowed or accomplished until a process has reached an END QUANTUM state. This means that many processes such as those that were suspended or hibernating without having reached their quantum limit are not adjusted. These processes are often the very processes that have tied up resources and need adjusting. Therefore, current operating system restrictions cause the computer system to fail to address many sources of load imbalance. The present invention is not limited to making adjustments only for END QUANTUM states.

In addition, the imbalance between WSINC and WSDEC commonly leads to oscillations. That is, when a decrease takes a working set slightly below the minimum amount of pages needed to avoid excessive page faults, a large number of pages are added by the operating system. It takes several applications of WSDEC to remove unnecessary pages and generally the operating system overshoots the optimum working set size again. This leads to constant oscillation between too many and too few pages and consumes a large amount of CPU time and memory resources while the WSL is being constantly changed. Therefore, computer manufacturers such as Digital Equipment Corporation recommend against trying any type of dynamic adjustment since it invariably causes more demands on the system and increases loading problems. Instead, dynamic operating system parameter values are only adjusted at long term intervals by a system manager and fail to compensate for dynamic system loads or demands.

The present invention solves these and other problems with current fixed adjustment approaches by using performance information on each process and statistical computer system information to automatically adjust dynamic operating system parameter values used to control WS operating limits. The adjustments are implemented on a short term periodic basis to re-allocate computer resources. The use of feedback controlled re-allocation on an individual process basis allows resource management beyond the simplistic operating system adjustments and results in increased average free page list sizes and decreased processing delays.

This is accomplished by providing a Dynamic Load Balancer (DLB) 30 which is coupled to the operating system controller 12, process adjuster 24 and performance monitor 20 and interacts with them to adjust parameter values used for adjusting the working set control values. The dynamic load balancer 30 is also connected to receive data from the process status registers 18 to accumulate statistical operating data about the computer system.

With the initial computer system operating parameters defined and loaded into the system, the present invention is implemented as a detached process which is called or activated using a pre-selected process name. The process is callable automatically as part of an initialization routine or whenever it is desired by system management. Running as a detached process also provides the ability to effect an orderly withdrawal or deactivation of the method of the present invention when desired. A fully independent process is not subject to terminal I/O limitations, monitoring, or overhead and consumes less CPU time during its automatic, dynamic adjusting activities.

The method and apparatus of the present invention must, however, be implemented with a high priority and access authorization to affect changes in the highest mode level, kernel or exec, of the operating system. Without this authorization, adjustable parameter changes are not allowed.

The DLB 30 takes only enough memory for a small detached process running on the order of 8000 bytes of dedicated storage. It should be noted that, very importantly, the DLB 30 does not completely replace the operating system controller 12 nor alter the operating system itself. This is done to assure that other programs and facilities operate as planned or predicted. No operating system alterations which cause system failure or generally void warranties or maintenance contracts are made.

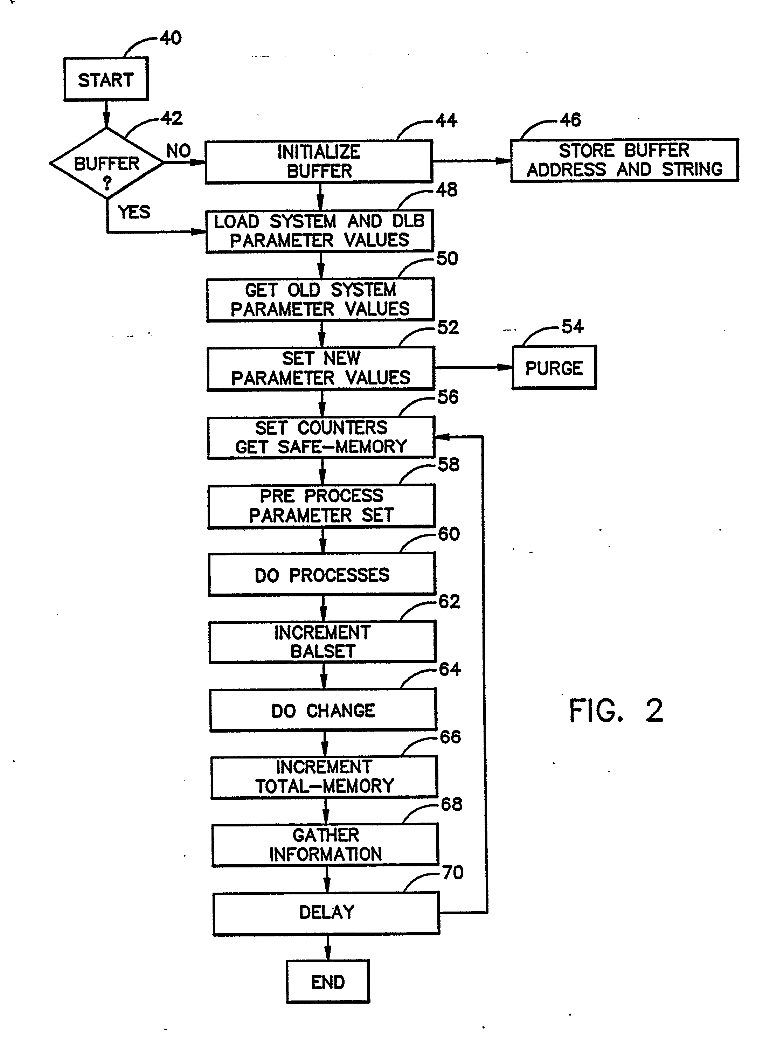

The method of the present invention is illustrated in flow chart form in Figure 2. A series of pseudo-code representations are also presented in Table I and V for purposes of clarity and illustration and, together with the accompanying description, to better enable those skilled in the art to better understand how, without undue experimentation, to prepare necessary machine executable instructions to operate the computer system according to the method of the present invention. A specific object or source code listing is not shown since the invention can be implemented in a variety of languages on several different computer operating systems and the description of the invention by means of a single source and/or object code of a working implementation would tend to obscure the inventive subject matter in extraneous detail and attenuate the clarity and conciseness required for an understanding of the invention. The method of the invention is implemented using the computer languagea and commands available for the multi-user computer system of interest. The preferred embodiment was implemented in the BLISS language used in the VAX/VMS operating environment.

Table I illustrates exemplary initialization steps used by the DLB 30 when activated, or reactivated, to establish necessary buffer memory locations and to load or retrieve vaious parameter values used in the method.

## TABLE I

### INITIALIZATION

```
INITIALIZATION: PROCEDURE
        INITIALIZE STORAGE AND STORE NEW AND OLD SYSTEM
        OPERATING PARAMETER VALUES AND PUT NEW VALUES IN SYSTEM
        CONTROLLER

DO
        DO BUFFER INITIALIZATION
                CHECK FOR ADDRESS AND RECOGNITION STRING
                IF BUFFER NOT FOUND THEN
                        INITIALIZE NEW BUFFER
                END
                ELSE
                        STORE BUFFER ADDRESS AND RECOGNITION STRING
                        STORE NEW OPERATING SYSTEM PARAMETER VALUES
                        STORE NEW DLB PROCESS PARAMETER VALUES
                        GET OLD OPERATING SYSTEM PARAMETER VALUES
                END
        GET PROCESS INFORMATION FOR DLB PROCESS
                DO GET SYSTEM INFORMATION
                        GET MPW-HILIMIT
                        GET MPW-LOLIMIT
                        GET VERSION
                        GET BALSETCNT
                        GET CPU
                END
        IF   DLB STATUS CHECKS FALSE OR
        IF OPERATING SYSTEM WRONG VERSION THEN
                EXIT
        ELSE
                GET BALSETCNT, NO-ADJ-INCR AND NO-ADJ-BASE
                SET NO-ADJ-MEM = (BALSETCNT x NO-ADJ-INCR) +  NO-ADJ-BASE
                SET LAST-BALSET = BALSETCNT
                SET LAST-ABANDONED = 0
                SET NEW CORRESPONDING OPERATING SYSTEM PARAMETER VALUES
        END
        PURGE UNUSED MEMORY ASSIGNED TO DLB PROCESS WS
    END
```

As shown in Figure 2 and TABLE I, the DLB 30 is first activated in a step 40 as a detached process and then checks, in a step 42, for the presence of a DLB 30 buffer 32 on the computer system. This is done by looking for an address value and a recognition string under a predefined logical label, here DLB-SYSBUF-ADDR, set aside at start up of the DLB 30. This is done in order to utilize any buffer that was created when the DLB 30 was previously running, which may still be active on the computer system. Buffers represent a valuable resource or memory overhead for the computer system which should not be wasted. This can occur where the method of the present invention is terminated or deactivated but the memory location or addresses used for the buffer 32 are not yet cleared by the computer system before reactivation.

If no buffer is found then a buffer 32 comprising a series of memory storage locations 32a, 32b, and 32c for the storage of data or parameter information by the DLB 30 is initialized in a step 44. This is done by loading the DLB 30 processing steps as a resident only process which requests on the order of 500 pages of memory for a WS. Some of these pages are used for storage and retrieval of parameter values and system information and others for execution of the method of the present invention.

As part of the initialization a computer memory location is designated under the logical "DLB-SYSBUF-ADDR", step 46, and used to store two consecutive data words. The first word is the buffer address and teh second is a dummy or recognition value. The dummy value can comprise any set of characters, that fits within the storage size selected, with 123456789 representing a convenient choice. This character string is used to test for the presence of a buffer when the load balancing process is activated and to prevent using an incorrect address value.

The buffer memory 32a, whether newly initialized or old, loaded in a step 48 with a set of pre-defined operating system parameter values as listed below in Table II. The operating system control parameters are listed illustrating new values stored in buffer memory 32a along with some typical computer system default values.

TABLE II

| Parameter | New Values | Default Values |
|-----------|------------|----------------|
| QUANTUM | 2 | 10 (10 millisec.) |
| IOTOA | 1 | |
| PFRATL | 0 | 0 faults/10 sec. |
| PFRATH | 10 | 150 faults/10 sec. |
| WSINC | 305 | 150 pages |
| WSDEC | 0 | 35 pages |
| AWNMIN | 10 | 50 pages |
| AWSTIME | 5 | 20 |
| PIXSCAN | balsetcnt | |
| MPW-THRESH | 16000 | 200 pages |

The operating system parameter values of Table II are used with the corresponding operating system parameters found in the operating system controller 12. These values are arrived at after careful consideration of general operating characteristics, either for the specific computer system or for a class of such computer systems. In the preferred embodiment, it was discovered that the disclosed set of values could be adopted for VAX/VMS type operating systems and provide improved operation for a number of different computer systems.

The initialization values stored in the buffers 32 are used in further steps to alter the system parameters to better allocate resources. Along this line, values normally assigned to working set adjustment parameters WSDEC and WSINC are adjusted to disable the operating system adjustment routine (WSDEC = 0) and provide room for a larger number of pages (WSINC = 503) in which to make adjustments. The minimum WS size (AWSMIN) is decreased to 10 pages from a typical 50 page default value. This prevents non-memory intensive processes from having a WSL that points to a large number of unused pages. Pages are added as needed.

The wait between process adjustments is decreased from a system default of 200 milliseconds to 70 (AWSTIME = 7) to allow for rapid response to dynamic load changes. The amount of time a process is allocated CPU time is decreased in the QUANTUM parameter. This allows the computer system to quickly remove the load or burden on system resources from short term processes.

Other operating system parameters effecting memory allocation such as MPW-THRESH are assigned higher values to decrease the flushing of pages to non-resident memory and their subsequent transfer to the free page list. This reduces the CPU time required to swap pages on hard page faults in favor of soft page faults. The PFRATL and PFRATH parameter values are adjusted to allow adjustment of the working set size at more frequent intervals.

In addition to the operating system parameters, another set of values associated with computational or DLB process parameters are loaded into the buffer memory 32b for use by the DLB 30 and these are listed in Table III. These parameters are used to set limits on the adjustments and timing of the present invention.

TABLE III

| Parameters | Initial stored values |
|---|---|
| NORM-WAIT | 90 seconds |
| WORRY-WAIT | 30 seconds |
| PANIC-WAIT | 6 seconds |
| PANIC-MEM | 2000 pages |
| WORRY-MEM | 6000 pages |
| NO-ADJ-BASE | 5000 pages |
| NO-ADJ-INCR | 200 pages |
| QUANTUM-BASE | 14 (intervals) |
| ABANDONED | 120 |
| MIN-PRIOR | 1 (level) |
| MAX-PRIOR | 16 (level) |
| MEM-MIN | 110 pages |
| ABS-MIN | 100 pages |
| ADJ-MIN | 20 pages |
| CPU-MIN | 3 |
| MAX-FAULTS | 10 (Faults /10 seconds) |
| MIN-MEM-ADJ | 20 pages |
| MAX-MEM-ADJ | 150 pages |
| BAS-MEM-ADJ | 60 pages |
| DLB-WSDECR | 180 pages |
| DLB-WSINCR | 503 pages |
| SYS-GROUP | 1 |

These parameters control functions such as the length of certain wait periods such as NORM-WAIT for normal mode waiting, WORRY-WAIT for worry mode waiting and PANIC-WAIT for panic mode waiting, as well as memory amounts that determine the appropriate waiting mode to use, PANIC-MEM, WORRY-MEM, as discussed further below. Two parameters control or set anormal increment used for WS page adjustment, NO-ADJ-INCR and a base amount NO-ADJ-BASE which are used to keep the memory adjustment process within some boundaries while all of the processes are being adjusted and new system information is collected, especially on system with very large free page lists. A series of parameters sets values for base, minimum, and maximum memory adjustment amounts, BASE-MEM-ADJ, MAX-MEM-ADJ, AND MIN-MEM-ADJ and the minimum value for memory, absolute memory, memory adjustment and CPU time sizes, MEM-MIN, ABS-MIN, ADJ-MIN, CPU-MIN. The minimum and maximum priority and fault rates, MIN-PRIOR, MAX-PRIOR, MAX-FAULTS are also designated. A GROUP parameter allows distinguishing between processes that are considered system processes and the remaing user processes. In the current embodiment system processes are not adjusted but verification of this parameter allows differentiation between processes as they are divided into such groups. Two very important parameter values are those assigned to the DLB-WSDECR and DLB-WSINCR parameters which are used to set increments and decrements for the WS adjustments by the DLB 30 independent of the operating system control parameters.

In Figure 2, the next step, 50 is to examine and verify the current values set by the operating system for the dynamic operating parameters. These values are copied into the buffer memory 32c or otherwise stored in a memory location or array which can be accessed at a later time as needed. This information is accumulated so that the computer system can be returned in an orderly manner to an original state or set of parameter values upon termination of the present method when desired. At the same time, this allows comparison to a set of desired parameters values before any changes are made. Long term remote storage of the initial operating system parameter values is not needed since they are automatically returned to the initial state if the system is re-initialized or reset for any reason.

The values assigned by the monitor 20 to the performance parameters for each process are also copied into buffer memory 32c in step 50. The current status of each job or process will be checked and recorded in memory during process adjustment and is retrieved from computer system memory where stored by the monitor 20 when needed. This includes collection of information regarding not only the working set information but current mode of a process, kernel level or regular OS, and wait states to prevent alteration of processing while parameters are adjusted.

12

Status information for each of the N processes is also accumulated in an accumulator 36 to initiate a process of accruing performance values to develop a statistical basis for adjusting parameter values.

Other basic system information such as the free page list available, overall system memory, and general system and memory allocations may also be checked. Where desired, the method of the present invention uses a verification step to confirm serial number or other software identification for the DLB 30 to asure compatibility with the computer operating system since parameter labels and values may differ from system to system.

The process of the present invention, dynamically alters or changes one or more of the system operating parameters. The adjusted parameters are selected based upon those operations that most easily or significantly affect the operation of the computer in terms of resource allocation.

For the preferred embodiment, it is also advantageous to make preliminary adjustments to some of the operating system parameters that will not be adjusted by the DLB 30 to provide adequate room in which the DLB 30 can work. That is, maximum working set sizes or dynamic memory allocations are adjusted to provide adequate room for the DLB 30 to make changes in. If such system parameters are assigned values that are too small, then the DLB 30 may be severely limited in making changes to other parameters to effectively reallocate resources.

These include values for lined lists of memory packets which are normally used to speed up processing requests for dynamic memory. These parameters are used to designate Small Request Packet lists, SRPCOUNT, SRPCOUNTV, I/O Request Packet Lists, IRPCOUNT, IRPCOUNTV, and Large Request Packet LIsts, LRPCOUNT, LRPCOUNTV. The values for these parameters are adjusted to improve memory access by assuring a large number of packets on linked lists in the computer rather than allocating space from non-paged memory. Paged and non-paged dynamic memory, maximum WS, virtual page memory and related parameters as listed in Table IV are also changed. The values listed in Table IV are minimum guidelines that make the preferred embodiment most useful.

TABLE IV

| EXTERNAL SYSTEM PARAMETERS | |
|---|---|
| MPW-H|LIMIT ≥ | 2500 or 15% of total memory pages whichever is greater up to 15000 |
| MPW-LOLIMIT ≥ | 1250 or 50% of MPW-HILIMIT up to 7500 |
| MPW-WAITLIMIT ≥ | 16000 |
| SYSMWCNT ≥ | 1000 |
| WSMAX ≥ | 4000 |
| IRPCOUNT ≥ | 300 |
| IRPCOUNTV ≥ | 1000 |
| LRPCOUNT ≥ | 50 |
| LRPCOUNTV ≥ | 80 |
| SRPCOUNT ≥ | 900 |
| SRPCOUNTV ≥ | 3000 |
| NPAGEDYN ≥ | 500000 |
| PAGEDYN ≥ | 500000 |
| NPAGEVIR ≥ | 900000 |
| VIRTUALPAGECNT ≥ | 15000 |
| PAGEFIEL.SYS ≥ | Twice physical memory pages |
| SWAPFILE = | Size such that always have more than WSMAX in one swapfile |
| WSEXTENT ≥ | 4000 or WSMAX |

The next step, 52, as shown in Figure 2, is to overwrite the dynamic system operating parameters or set them to the new operating or control values stored in the buffers 32, as shown in step 48. In some cases the new and old parameters may agree due to previous system tuning but it is anticipated that these values are generally different owing to the more specific and dynamic manner in which the present invention uses the parameters to effect system operating characteristics.

At this point the DLB 30 checks the pages in its own WSL and purges those that are not needed to provide as compact an operating entity as possible. The DLB 30 is designed to use as little of the resources of the computer system it is improving as possible. This unused memory is purged in step 54 using conventional computer system purging routines and returned to the computer system free page list.

A pseudocode listing for the method steps used in the present invention for individual process adjustment is shown in Table V.

## TABLE V

### DYNAMIC PROCESS ADJUSTMENT

```
DYNAMIC PROCESS ADJUSTMENT: PROCEDURE
        CHECK PROCESS ELIGIBILITY FOR ADJUSTMENT, CHECK PROCESS
        PERFORMANCE AND ADJUST PROCESS RESOURCES


     DO
        INCREMENT CYCLE COUNTER BY 1
        GET ACTIVE_COUNT AND COM_COUNT
        GET TOTAL AND FREE MEMORY
        IF FREE MEMORY > no_adj_mem THEN
        DO
            NOT ADJUST
        END
        ELSE
            SET ACTIVE_COUNT = MAXIMUM OF 1 OR
                (LAST_BALSET - LAST_ABANDONED)
            SET MEM_SAFE_AMOUNT = MEM_MIN +
                FREE_MEM / [MAX OF 1 OR 0.70(ACTIVE_COUNT)]
            SET QUANTUM = 2
            SET IOTA = 2
        END
        DO PROCESSES
```

```
        INITIALIZE C_COUNT, PRE-ADJUSTS, LAST BALSET,
                 AND LAST ABANDONED EQUAL TO 0
    START WITH FIRST PROCESS
    DO
    CHECK PROCESS STATUS
        IF NO MORE PROCESSES THEN
        EXIT
    IF PROCESS SWAPPED OUT OR SUSPENDED THEN
        NO ADJUST
        END
    ELSE
        GET PROCESS INFORMATION
        GET PROCESS INDEX
        RESET CURRENT INFORMATION TO GET PROCESS
                            INFORMATION
        IF CURRENT PROCESS ID ≠ PREVIOUS PROCESS
            ID THEN
            DO NEW JOB
    END
    STORE RETRIEVED PROCESS INFORMATION AS
            PREVIOUS INFORMATION
    DO RESET ADJJUSTMENT DATA
        SET LAST MEM AMOUNT TO BAS_MEM_AMOUNT
        SET LAST MEM EQUAL TO 0
        SET PF_SINCE_ADJ EQUAL TO 0
        SET LEVEL EQUAL TO 0
        END
    END
IF STATUS EQUAL TO TRUE THEN INCREMENT LAST BALSET BY 1
IF PROCESS NOT ABANDONED THEN INCREMENT
        LAST ABANDONED BY 1
IF PROCESS STATUS IS EQUAL TO C_COM THEN
            INCREMENT C_COUNT BY 1
IF DO ADJ AND (ADJ ALL OR NOT IN SYS GROUP) THEN
DO CHECK PROCESS
    SET THE PROCESS ID AND INDEX
    INCREMENT PF_SINCE_ADJST BY CURRENT - PREVIOUS PF
    IF CURRENT MEMORY < ABS_PROC_MIN OR
    IF PAGE FAULTS ≠ 0 AND CHANGE IN
            CURRENT CPU FROM PREVIOUS CPU > CPU_MIN OR
    IF CURRENT PRIOR IS OUTSIDE OF RANGE OR
    IF CURRENT MEMORY NOT EQUAL TO PREVIOUS MEMORY THEN
        SET PREVIOUS EQUAL TO CURRENT INFORMATION
            SET LEVEL EQUAL TO ALEVEL
    END
```

15

```
        ELSE
               IF LEVEL > ABANDONED THEN
               RETURN
        END
        ELSE
        DO ADJUST WORKING SET FOR THIS PROCESS
               SET CPU_AMNT = CURRENT CPU - PREVIOUS CPU
               IF PF SINCE ADJ > MAX_FAULTS THEN
                       MEMAMT EQUAL TO LAST_MEM_AMT/2
               END
               ELSE
                       MEMAMT EQUAL TO 1.5 * LAST_MEM_AMT
               END
               MEMAMNT EQUAL TO MIN OF (MAX_MEM_ADJ OR MAX
                                       (MIN_MEM_ADJ, MEMEAMT)
        END
        DO RESET INFO
               IF LEVEL GREATER > ABANDONED THEN ADJAMT EQUAL TO 0
               ELSE
               IF CURRENT MEMORY < SAFE MEMORY THEN RETURN
               IF MEMAMT EQUAL TO LAST_MEM_AMT, AND
                           CURRENT MEMORY EQUAL TO LAST_MEM
                       THEN LEVEL EQUAL TO MAX (LEVEL-1 , 0)
                       PF_SINCE_ADJ EQUAL TO 0
                       RETURN
               END
        ADJAMT EQUAL TO - (MEMAMT + (CURRENT_WS - CURRENT_MEM)
        END
        SET OUTSWAPPED PROCESSES LEVEL EQUAL TO ABANDONDED
        SET WAIT STATE PROCESSES LEVEL EQUAL TO MAX (LEVEL - 1, 0)
        DO
               SEND ADJAMT AND DLB_WSINCR VALUES TO ADJUSTER
               DO SYS$ADJWSL
               END
        END
        IF STATUS FALSE THEN EXIT
        INCREMENT PRE_ADJUSTS BY 1
        LAST_MEM_AMT = MEMAMT
        SET LAST_MEM = CURRENT_MEM
        SET PF SINCE ADJ = 0
        STORE JOB INFO
        END

SET COMPUTABLE PROCESSES = C_COUNT
SET LAST BALANCE SET = MIN OF LAST BALSET OR BALSETCNT
```

```
SET LAST BALANCE SET = MAX OF 1 OR LAST BALSET - 3

DO CHANGE PARAMETERS
        GET THE TYPE OF CPU USED IN SYSTEM
        GET NUMBER OF COMPUTABLE PROCESSES ON SYSTEM
        GET LAST BALSETCNT
        IF NUMBER OF COMPUTABLE PROCESSES IS ≤ 1 THEN
                SET QUANTUM = QUANTUM_BASE
        END
        ELSE
                SET QUANTUM = MAXIMUM OF:  2 OR
                        2(QUANTUM_BASE/COM_COUNT)
        END
        IF CPU TYPE MATCHES PREDETERMINED TYPE THEN
                SET MULTIPLY QUANTUM BY SPEED FACTOR
        END
        SET AWSTIME = MAXIMUM OF QUANTUM OR 5
        SET PIXSCAN = MAXIMUM OF (MIN OF LAST BALSET OR
                5 * QUANTUM_BASE/QUANTUM) OR BALSET OR 10
        SET IOTA TO 1
    END
    INCREMENT TOT_ADJUSTS BY PRE_ ADJUSTS
    END
DO GATHER STATS INFO
        GET NUMBER OF DLB PROCESSING CYCLES SIN RUN
        GET AMOUNT OF MEMORY ALLOWED EACH ACTIVE PROCESS FROM
            MEM_SAFE_AMT
        GET TOTAL NUMBER OF PROCESS ADJUSTED FROM TOT_ADJUSTS
        GET NUMBER OF PROCESSES LAST ADJUSTED FROM PRE_ADJUSTS
        GET LAST BALSET MINUS LAST_ABANDONED
        GET NUMBER OF FREE PAGE LIST QUE ENTIRES
        GET MAXIMUM NUMBER OF ALLOWABLE QUEUE ENTRIES.
END
DO WAIT
        GET AMOUNTS FOR TOTAL MEMORY AND FREE MEMORY
        SET INITIAL MODE EQUAL TO GET MODE
            IF FREE MEMORY IS ≤ 10 % TOTAL MEMORY OR PANIC_MEM
                    THEN SELECT PANIC MODE
            IF FREE MEMORY IS ≤ 50 % TOTAL MEMORY OR ≤ WORRY_MEM
                    THEN SELECT WORRY MODE
            ELSE
                    SELECT NORMAL MODE
            END
        SET DELAY = MODE VALUE ( 6,30,90)


    DO
        INCREMENT WAIT FROM 1 TO MODE VALUE/PANIC VALUE 1
        DELAY BY PANIC VALUE
        GET MEMORY FREE AND TOTAL
        DO GET MODE (AGAIN)
        IF MODE IS LSS THAN INITIAL MODE THEN EXIT
```

As shown in table V and Figure 2, the DLB 30 begins the adjustment process at step 56 by incrementing a cycle counter and retrieving system information from the operating system or the monitor 20. This information includes the number of active processes on the system, ACTIVE-COUNT, the number of computable processes on the system, COM-COUNT, and the amount of total and free memory, TOT-MEM, FREE-MEM. If the DLB 30 finds that the amount of free memory is greater than the value set for the N-ADJ-MEM parameter then no adjustments will be made at this time and the DLB 30 enters a waiting mode.

Otherwise, the DLB 30 proceeds to reset the ACTIVE-COUNT value to the difference between the last balance set count, LAST-BALSET and the last count for the number of abandoned processes, LAST-ABANDONED. However, a minimum value of one is enforced.

A safe memory amount, MEM-SAFE-AMT is set to provide a buffer value for the amount of memory that should be held in reserve for process calls. As seen in Table V, the value for the MEM-SAFE-AMT parameter is set equal to a minimum memory value, MEM-MIN, plus the free memory value divided by 70 percent of the number of active process but not less than 1. This estimates safe memory based on the fact that up to about 70 percent of the active processes may request memory on subsequent passes. The DLB maintains sufficient free memory in its allocation scheme to adjusts for dynamic load changes quickly.

New values are set, in a step 58, for the QUANTUM and IOTA parameters before further processing to encourage quick rescheduling of adjusted processes.

The DLB 30 now proceeds in a step 60 to do the individual process adjustments as shown in the pseudocode listing of Table V. Some of the parameter values retrieved include process id, PID, process CPU time, CPUTIME, PAGEFAULTS, process page count, PPGCNT, global page count, GPGCNT, and priority base, PRIB.

In step 60, starting with the first process and continuing until they are all checked or adjusted, the DLB 30 checks the operating characteristics of the computer and each process on the computer by reading values stored by the monitor 20 and the process status registers 18.

It is important to only check the status of each process before gathering additional information to determine if it is swapped out or suspended before any further information is retrieved on that process. This is due to the fact that the act of inquiring about process information such as page counts, page faults, etc., with an inactive process will many times cause that process to be reactivated. This would be self defeating since the purpose of the invention is to reduce unnecessary resource usage.

Once the status of a process is known, those processes that are still active and not in certain wait states are checked to see what the current status is and what the performance is. The performance parameter values of each process are compared to a set of desired performance criteria.

If the current memory of the process WS is less than or equal to the parameter value for absolute minimum WS size then no further change is made. If the number of current page faults is greater than previously measured and the current amount of CPU time is set equal to or higher than the value of minimum CPU time then no change is made. If the current priority for the process is outside of the priority range established by MIN-PRIOR and MAX-PRIOR then the process is not adjusted. If the current memory allocation for the process is not equal to the previous memory reading then the process is not adjusted. Also if the process status indicates it is abandoned then no adjustment is needed. Otherwise, any process not meeting these criteria is set as being eligible for adjustment.

To make adjustments to the process the computer system adjustment routine used by the adjuster 22 is called by the DLB 30. This is generally done by sending an asynchronous trap to the process requesting that it run a program. The program that is provided for the process to run is the computer system WS adjustment routine. In the VAX\VMS this routine is called sys$adjwsl. However, other computer systems employ similar routines that are known in the art.

The DLB 30 retrieves the basic process information listed in Table VI which indicates the performance of the process since the last time it was adjusted. This information is stored by the DLB 30 for later comparison on subsequent passes. At the same time, the information stored for this process on the previous pass is retrieved for comparison of certain parameters such as page faults, CPU time and page counts.

Based on the number of page faults that have occurred and the change in CPU-AMNT since the last time the DLB 30 made an adjustment determines the value chosen for a MEMAMT parameter and thus the ADJSMAMT parameter. The value of this latter parameter along with the process ID., index location on the computer, DBL-WSINCR and transferred to the adjuster 24 for use in the sys$adjwsl routine to rest the control values for the process working set. In this manner the process is adjusted by what it thinks is the operating system supplied values which are controlled by the DLB 30. This allows the DLB 30 to make adjustment to each individual process based on system information.

At this point the values for the LAST-MEME, MEM-AMT, PRE-ADJSUTS, and PF-SINCE-ADJ parameters are updated and the process performance parameter information stored. The number of computable processes is stored for reference and the value of the LAST-BALSET is updated to remove the DLB process, a null process, and the page swapper process from the list to accurately reflect the processes to be adjusted.

Once a process WS has been adjusted the DLB 30 sets new system operating parameters according to the general demand or loading on the computer system. The number of computable processes are compared to see if there is one or less. If this is true then the value of QUANTUM is set to the value stored under the QUANTUM-BASE parameter as shown in Table II. Otherwise, the value chosen for QUANTUM is determined by the maximum of either 2 or twice the quotient of the QUANTUM-BASE value divided by the number of current computable processes.

In those cases where the CPU type matches a specified type then the value assigned to QUANTUM may be adjusted accordingly. This is used to account for processing speed differences encountered in some types of systems such that CPU time and memory allocations can be adjusted to take advantage of higher processing speeds. The factor by which a given computer system CPU performs at a significantly higher level is known in the art.

The value for AWSTIME is set equal to the maximum for either QUANTUM or 5. PIXSCAN is set to the maximum of either last balance set plus 5 or quantum which ever is lowest, or the current balance set, or 10. The value of the IOTA parameter is set at 1. The number adjustments made is incremented and the system proceeds to gather system information for forming the historical or statistical basis for making future adjustments.

The DLB then waits for a predetermined short delay to make sure that the computer system has implemented the changes and then proceeds to the waiting modes described above.

The next step in the inventive method is to pause for a predetermined period of time to allow the computer system to operate with the new parameter value settings. Note, that while the computer system generally begins processing using the default initialization values, it is readily understood by those skilled in the art that the new set of values can be implemented at any time. That is, new initialization values for operating parameters can be provided at power-up or reset by installing the DLB 30 to be automatically called as part of the system start-up and overwrite the values as initialization occurs.

The period of time the DLB 30 pauses before initiating additional alterations to the parameters or otherwise adjusting the processes N is determined by two factors. The first is the average length of time the computer system requires to adequately readjust to the latest alteration of operating system parameters, and the degree of deviation between the desired and actual system performance.

The first factor has been found to be on the order of about six seconds for an average large scale multi-user computer system. Obviously, those skilled in the art will readily understand that this number will vary according to the average load experienced by the computer system under consideration. However, experience shows that six seconds provides a good minimum sampling rate or time value for the method of the present invention.

Every six seconds the DLB 30 performs a quick review or check of the computer system to see if it should initiate process changes or wait longer. At the six second point the total amount of memory in the computer system is stored and compared to the current free memory. If the free memory is ten percent or less of the total memory then the DLB sets itself in a "panic mode" and begins r return to the process adjustment steps immediately. If the free memory is less than or equal to fifty percent of the total memory then the DLB 30 sets itself in a "worry" mode and continues to wait a predetermined period designated by the WORRY-WAIT parameter. If the free memory is greater than 50 percent of the total memory then the DLB is set to "normal" mode and continues to wait a period designated by the NORMAL-WAIT parameter. The various "modes" determine the time the DLB waits before adjusting processes.

The mode tests are used to accommodate sudden changes in loading which demand more prompt attention versus gradual changes in operating system demands. This assures that the computer system remains responsive even with high demand or rapidly changing dynamic loads.

It has been found useful in the preferred embodiment to set three levels of response which are implemented as three different sampling rates or waiting periods. The fist rate is the six second rate which is used at initialization and when the system is set in the "panic" mode. The second level is set to about thirty seconds and is treated as a "worry" mode wait. In this mode there are significant variations in desired performance but the system is gradually accommodating the load. The third level is on the order of ninety seconds and represents the "normal" mode wait. Here, additional or no alterations in performance are desired and the system will fluctuate in performance by minor amounts over relatively long operating periods. As shown in Table II these predetermined waiting periods are loaded at initialization of the method used by the load balancer 30.

Those skilled in the art will readily understand that other waiting periods can be used where the resources of the computer system and average dynamic changes in load would find it useful.

The method of the present invention was implemented in a Digital Equipment Company VAX 11/785 type computer system using the VAX/VMS operating system with a virtual memory size of 16 megabytes. Despite using system tuning, the system frequently had only 2000-3000 pages of free memory. After

19

implementing the method of the present invention the free page list increased to an average of 11000 to 12000 pages.

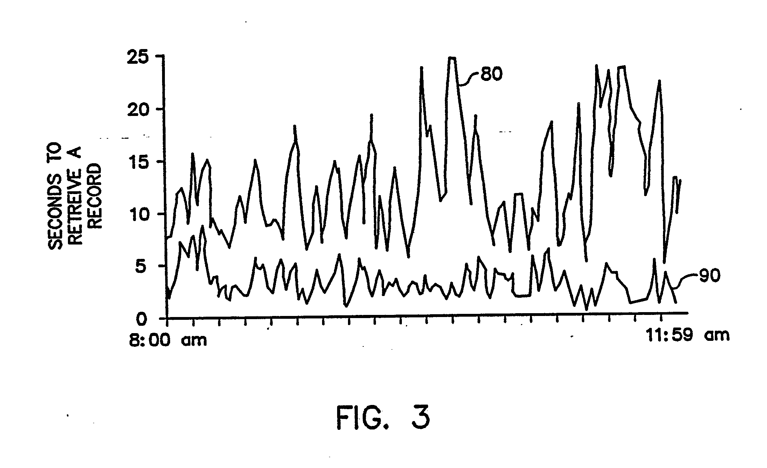

The method of the present invention was also implemented on another Digital Equipment Company VAX-VMS type computer system which was experiencing long processing delays and many system lock-outs due to I/O bottlenecks. The average response time for responding to process requests for this computer system is shown graphically in Figure 3 as line 80 and extends over a four hour period. The load balancer of the present invention was set as an active process on the computer system and the same statistical data accumulated for system response. The average system performance using the present invention is shown in Figure 3 as line 90. An increase in responsiveness for the computer was clearly achieved and system lock-outs were virtually eliminated, even for low priority processes.

It is noted that the method of the present invention uses a periodic adjustment of the processes and has a wait period in between. That is, the method does not continuously check all processes and make adjustments as this would place a large demand on CPU time.

Therefore, what has been described is a new method and apparatus for dynamically and automatically adjusting system operating parameters for processes in a multi-user computer environment to optimize the load processes present to computer resources such as resident memory and central processor unit time. In addition, the described method comprises adjusting performance values for optimizing resource allocation.

It is well understood that other parameter tables and values can be used with the method of the present invention.

The foregoing description of preferred embodiments has been presented for purposes of illustration and description. It is not intended to be exhaustive nor to limit the invention to the precise form disclosed, and many modifications and variations are possible in light of the above teaching. The embodiments were chosen and described to best explain the principles of the invention and its practical application to thereby enable others skilled in the art to best utilize the invention in various embodiments and with various modifications as are suited to the particular use contemplated. It is intended that the scope of the invention be defined by the claims and their equivalents.

## Claims

1. In a multi-user computer system using a central processing unit (CPU), a page addressed virtual memory operating system, and a fixed set of system operating parameters with pre-assigned control values for allocating access to system resources, the resources comprising CPU processing cycles and resident memory, and employing one or more monitor routines for generating values for a set of measured performance parameters for each process a method of dynamically re-allocating system resources through adjustment of the system operating parameter values, comprising the steps of:
providing a pre-defined set of desired performance values in a memory storage location;
accumulating current system response for each process by recording said measured performance values for each process in a second memory location;
generating adjustment factors according to a predetermined relatioship for each corresponding measured and desired performance value;
adjusting said system operating parameters in response to said adjustment factors.

2. The method of Claim 1 further comprising the steps of:
waiting a predetermined period of time and returning to said accumulating step, said waiting period being selected from a plurality of waiting periods of preset length in response to said adjustment factors.

3. The method of Claim 2 wherein there are at least a first, second and third preset waiting period having a length of about 6, 30, and 90 seconds respectively.

4. The method of Claim 2 wherein said computer system provides a termination command when it is desired to terminate said method and further comprises the steps of checking for said termination command and terminating said re-allocation method in response thereto and returning to said recording step otherwise.

5. The method of Claim 1 further comprising the steps of:
detecting said pre-assigned system control values; and
storing said detected values in a third memory location.

6. The method of Claim 1 wherein said system operating parameters are automatically loaded by said computer system at system initialization.

7. The method of Claim 1 wherein said operating parameters comprise parameters controlling pre-selected minimum and maximum values for central processor access time, minimum number of pages of memory in a process resident set, size of resident set increments, size of resident set decrements, maximum and minimum page fault rates, and size of data transfer groups for DMA transfers.

8. The method of Claim 1 wherein said performance parameters comprise parameters for page fault rate, page faults, resident set size, suspension waits, page collision waits, and free pages for each process.

9. The method of Claim 8 wherein said step of adjusting further comprises the steps of:
increasing working set size and access time for processes exceeding said page fault rate high or low limits; and
decreasing working set size and access time for processes in a range between said page fault rate high or low limits.

10. The method of Claim 1 further comprising the step of storing said performance parameters and associated values in a third memory storage location.

11. The method of Claim 1 further comprising the step of initializing system buffers for storing data after storing said first and second sets of control parameters.

12. The method of Claim 1 further comprises the step of compiling statistical information on process and system response.

13. An apparatus for controlling the allocation of resources in a multi-user computer system having a central processing unit (CPU), page addressed virtual memory connected to said CPU, and a fixed set of system operating parameters with pre-assigned control values for allocating access to system resources, the resources comprising CPU processing cycles and resident memory, and employing one or more performance monitors for generating values for a set of measured performance parameters for each process relative to its allocation of system resources, comprising:
system storage means connected to said CPU for storing system operating parameters and corresponding system control values;
status storage means connected to said CPU for storing values associated with said performance parameters for each process;
monitoring means operatively coupled to said CPU for measuring said performance values for each active process and storing them in said status storage means;
a status accumulator connected to said monitoring means, said accumulator being capable of receiving measured performance values and accumulating them to form a set of system status values;
resource control means connected to said CPU for providing a set of adjustement factors for said performance parameters;
adjustment means connected to said resource means and said CPU for adjusting said control values in response to said adjustment factors.

14. The apparatus of Claim 15 further comprising a mode selector connected to said adjustment means and said monitoring means for determining the frequency of monitoring and adjusting in response to previous adjustment values.

15. The apparatus of Claim 15 further comprising at least one buffer means for storing information.

21

FIG. 1

START — 40

42
BUFFER ?

NO → INITIALIZE BUFFER — 44 → STORE BUFFER ADDRESS AND STRING — 46

YES

LOAD SYSTEM AND DLB PARAMETER VALUES — 48

GET OLD SYSTEM PARAMETER VALUES — 50

SET NEW PARAMETER VALUES — 52 → PURGE — 54

SET COUNTERS GET SAFE—MEMORY — 56

PRE PROCESS PARAMETER SET — 58

DO PROCESSES — 60

INCREMENT BALSET — 62

DO CHANGE — 64

INCREMENT TOTAL—MEMORY — 66

GATHER INFORMATION — 68

DELAY — 70

END

FIG. 2

FIG. 3